# EUROPEAN PATENT SPECIFICATION

(11) **EP 3 594 304 B1**
(45) Date of publication and mention of the grant of the patent: **18.08.2021**
(21) Application number: 18763250.0
(22) Date of filing: 22.01.2018
(51) Int. Cl.: C14C 3/06, C09K 3/00

(54) **POWDERY COMPOSITION FOR HEXAVALENT CHROMIUM TREATMENT, TABLET, AND METHOD FOR PRODUCING LEATHER**
PULVERFÖRMIGE ZUSAMMENSETZUNG ZUR SECHSWERTIGEN CHROMBEHANDLUNG, TABLETTE UND VERFAHREN ZUR HERSTELLUNG VON LEDER
COMPOSITION PULVÉRULENTE POUR TRAITEMENT DU CHROME HEXAVALENT, COMPRIMÉ, ET PROCÉDÉ DE PRODUCTION DE CUIR

(30) Priority: 10.03.2017 JP 2017046530
(43) Date of publication of application: 15.01.2020
(73) Proprietor: Citizen Watch Co., Ltd., Tokyo 188-8511 (JP)
(72) Inventor: AKAO, Yuji, Nishitokyo-shi Tokyo 188-8511 (JP)
(74) Representative: Hoffmann Eitle
(86) International application number: PCT/JP2018/001822
(87) International publication number: WO 2018/163621

(56) References cited:
- WO-A1-02/00941
- WO-A1-2016/021461
- JP-A- 2008 231 388
- JP-A- 2008 238 150
- JP-A- 2016 121 251
- US-A1- 2009 249 554
- DATABASE WPI Week 201332 Thomson Scientific, London, GB; AN 2012-R48669 XP002800686, & CN 102 719 573 A (UNIV SICHUAN) 10 October 2012 (2012-10-10)

## Description

### Field

The present invention relates to a powdery composition and a tablet for hexavalent chromium treatment and to a method for producing a leather.

### Background

A leather or a leather article obtained through a chrome tanning step sometimes contains harmful hexavalent chromium. When such a leather or a leather article is treated with a hexavalent chromium treatment agent, the hexavalent chromium is reduced to harmless trivalent chromium. Hexavalent chromium treatment solutions containing an organic compound having the ability to act on hexavalent chromium for reduction into trivalent chromium (specifically organic compounds having a specific structure, a hydroxyphenyl group, no aldehyde groups, and no carboxy groups) and a solvent are known as hexavalent chromium treatment agents (Patent Literature 1).

### Citation List

### Patent Literature

Patent Literature 1: International Patent Application Laid-open No. 2016/021461

### Summary

### Technical Problem

However, the hexavalent chromium treatment solution described in Patent Literature 1 contains a solvent, and therefore is difficult to handle during transportation and the like.

It is an object of the present invention to provide a hexavalent chromium treatment agent that is easy to handle during transportation and the like.

A powdery composition for hexavalent chromium treatment according to the invention includes a hexavalent chromium reducing compound component capable of reducing hexavalent chromium into trivalent chromium; and a component capable of trapping moisture in air and dissolving in water, the hexavalent chromium reducing compound component containing an organic compound (A) having a structure represented by the following chemical formula (1) and capable of acting on hexavalent chromium for reduction into trivalent chromium, having a hydroxyphenyl group, and having no aldehyde groups and no carboxy groups.

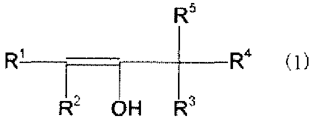

(R¹, R², R³, R⁴, and R⁵ are each independently a substituent composed of C, H, and O atoms, and any of R¹ or R², and R³, R⁴ or R⁵ is optionally linked together to form a ring.)

### Advantageous Effects of Invention

The powdery composition for hexavalent chromium treatment of the present invention is easy to handle even during transportation and the like.

### Description of Embodiments

Modes (embodiments) for working the present invention are described in detail below. The present invention is not limited by the content of the embodiments. The constituent elements described below include elements easily presumed by a person skilled in the art and substantially identical elements. The configurations described below can be combined, as appropriate. The configurations can also be variously abbreviated, substituted and modified within a scope that does not deviate from the gist of the present invention.

### <Powdery composition for hexavalent chromium treatment>

The powdery composition for hexavalent chromium treatment according to the embodiments contains a hexavalent chromium reducing compound component (referred to as a component (I) in the present specification) that can reduce hexavalent chromium into trivalent chromium and a component (referred to as a component (II) in the present specification) capable of trapping moisture in air and dissolving in water. The powdery composition for hexavalent chromium treatment is easy to handle even during transportation and the like. The powdery composition for hexavalent chromium treatment does not ordinarily contain a solvent.

A leather or a leather article obtained through a chrome tanning step sometimes contains harmful hexavalent chromium (a compound containing Cr(VI)). When such a leather or a leather article undergoes treatment with a hexavalent chromium treatment agent, the hexavalent chromium is reduced to harmless trivalent chromium (a compound containing Cr(III)). A hexavalent chromium treatment solution containing an organic compound (specifically an organic compound having a specific structure, a hydroxyphenyl group, no aldehyde groups, and no carboxy groups) with the ability to act on hexavalent chromium for reduction into trivalent chromium and a solvent is known as a hexavalent chromium treatment agent (Patent Literature 1). A mixed solvent of water and alcohol with 50% by mass or lower, for example, is used as the solvent in the hexavalent chromium treatment solution. Thus, the hexavalent chromium treatment solution has large weight due to containing a solvent in addition to the organic compound and is flammable due to containing the alcohol. Accordingly, the hexavalent chromium treatment solution can be difficult to handle during transportation, in containers, and the like. Moreover, the properties are difficult to maintain due to moisture absorption, and therefore it is difficult to compose a hexavalent chromium treatment agent with only the organic compound and not using a solvent.

In contrast, the powdery composition for hexavalent chromium treatment according to the embodiments uses a combination of the component (I) and the component (II), and therefore has the ability to reduce hexavalent chromium into harmless trivalent chromium and is easy to handle even during transportation and the like. Production costs are also curbed. The property of reducing hexavalent chromium can be maintained for a long period of time. This long period is thought to be because the component (II) in the powdery composition for hexavalent chromium treatment according to the embodiments traps moisture in the air and inhibits changes to the component (I).

When the powdery composition for hexavalent chromium treatment according to the embodiments is used to reduce the hexavalent chromium in a leather or a leather article, a solvent is added to the powdery composition for hexavalent chromium treatment to prepare the hexavalent chromium treatment solution. Because the powdery composition for hexavalent chromium treatment contains the component (II), the composition easily dissolves. The resulting hexavalent chromium treatment solution can reduce the hexavalent chromium in the leather or the leather article into harmless trivalent chromium. It is difficult to compose the hexavalent chromium treatment agent with only the component (I) because then dissolution in a solvent is difficult.

When the powdery composition for hexavalent chromium treatment according to the embodiments is used to carry out the hexavalent chromium treatment step, a hexavalent chromium reducing compound component reduces the hexavalent chromium in the leather or the leather article into trivalent chromium. The leather or the leather article then contains trivalent chromium and residual hexavalent chromium reducing compound component that was not used in the reduction. With the treatment, the hexavalent chromium content measured in the leather or the leather article according to ISO 17075:2008-02 is ordinarily smaller than 3 ppm and preferably 2 ppm or smaller. Ordinarily the trivalent chromium content is at least 4,000 ppm, and may be at least 4,500 ppm and even at least 5,000 ppm, but the trivalent chromium content is not limited thereto since there are differences depending on the leather or the leather article. The total chromium content does not change before and after the treatment with the hexavalent chromium treatment agent.

[The hexavalent chromium reducing compound component (component (I)) capable of reducing hexavalent chromium into trivalent chromium]

The component (I) is a compound capable of reducing hexavalent chromium into trivalent chromium, and examples of the compound component (I) include an organic compound (A) represented by formula (1). The compound (A) is composed of at least C, O, and H atoms capable of acting on hexavalent chromium for reduction into trivalent chromium, has a single bond and double bond among three carbon atoms, and has a hydroxy group linked to the central carbon atom. The structure represented by formula (1) is capable of acting on hexavalent chromium for reduction into trivalent chromium.

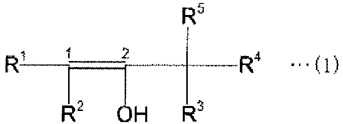

In formula (1), R¹, R², R³, R⁴, and R⁵ are each independently a substituent composed of C, H, and O (substituent composed of C, H, and optionally O), preferably contain a carbonyl group having an unsaturated bond, and have no reactive functional groups such as an aldehyde group and a carboxy group. It is also preferable that R¹, R², R³, R⁴, and R⁵ have no functional groups including nitrogen-containing groups such as an amine group and an isocyanate group and sulfur-containing groups such as a sulfate group. Any of R¹ or R², and R³, R⁴ or R⁵ may be linked together to form a ring.

The compound having the structure represented by formula (1) may be a cyclic hydrocarbon or may be also an aromatic hydrocarbon having a monocyclic ring or a fused ring. If the compound is an aromatic hydrocarbon, the π bond is, in effect, delocalized without staying in the double bond between the carbon atoms 1 and 2 in formula (1). The cyclic hydrocarbon or the aromatic hydrocarbon may have a substituent.

It is preferable that the organic compound (A) have the structure represented by formula (1) and a hydroxy group and have no reactive functional groups such as an aldehyde group and a carboxy group in the structure.

It is preferable that the component (I) comprise, in addition to the organic compound (A), an organic compound (B) that has the structure represented by formula (1) and capable of acting on hexavalent chromium for reduction into trivalent chromium and that has no hydroxyphenyl groups, no aldehyde groups, and no carboxy groups. The organic compound (B) preferably has no functional groups including nitrogen-containing groups such as an amine group and an isocyanate group and sulfur-containing groups such as a sulfate group.

Examples of the organic compound (A) and the organic compound (B) include the following compounds (formulas (2) to (13)) and derivatives thereof. In the present embodiment, it is also favorable to use a mixture of two or more of these compounds and derivatives thereof.

### Pyrogallol

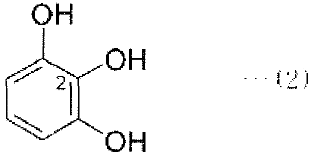

### Gallic acid propyl

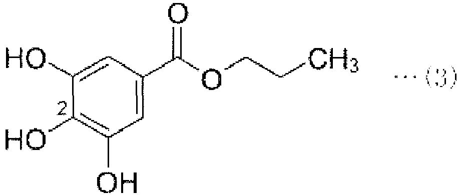

### Tannic acid

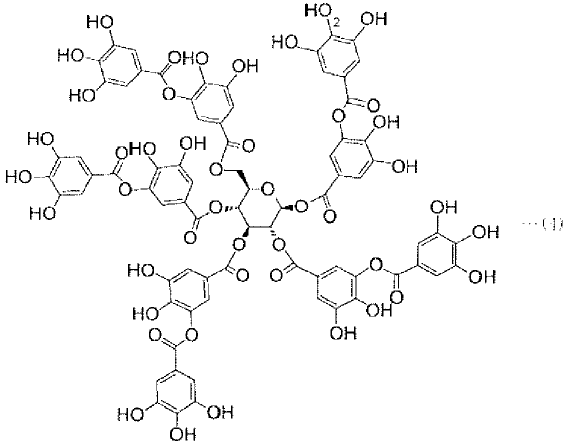

### 1,2,4-trihydroxybenzene

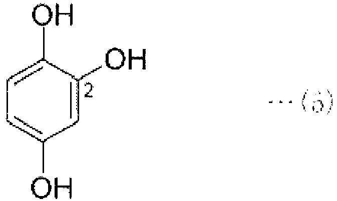

### Phloroglucinol

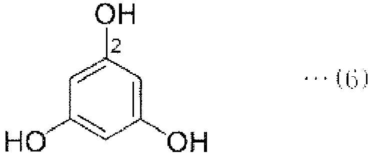

### Resorcin

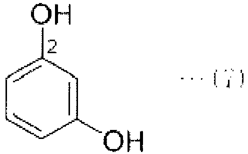

### Hydroquinone

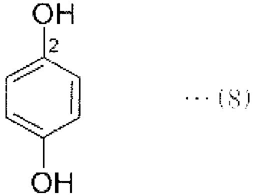

### Catechol

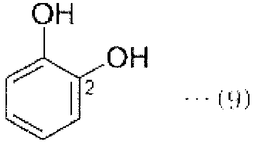

### 2,3-dihydroxynaphthalene

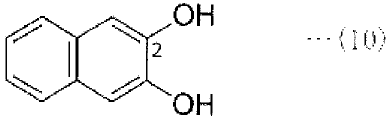

### 2,7-dihydroxynaphthalene

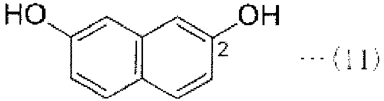

### 1,4,9,10-anthracenetetraol

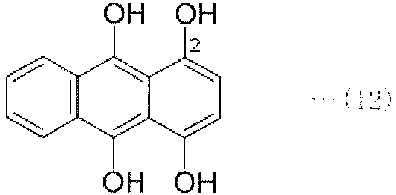

### Ascorbic acid

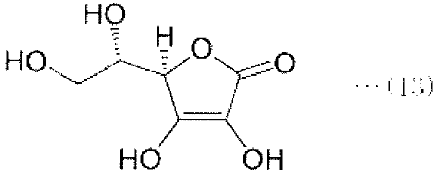

The carbon atom 2 in formulas (2) to (12) corresponds, for example, to the carbon atom 2 in formula (1) .

The component (I) is an organic compound that acts on hexavalent chromium, which is harmful, for chemical conversion into a harmless compound. This compound can, for example, reduce hexavalent chromium into harmless trivalent chromium.

Generally known reducing agents include lithium aluminum hydride, sodium borohydride, hydrazine, dibutylaluminum hydride, oxalic acid, and formic acid. The use of these typical reducing agents poses various problems. When lithium aluminum hydride is used as a reducing agent, the form of a powder makes a strong reducing agent. However, this reducing agent is dangerous because it reacts vigorously with water to produce hydrogen, which is flammable. Such an agent that produces a flammable substance in this manner is unsuitable for use in leathers or leather articles which, in general, are often brought into contact with the skin (sweat) or exposed to rain.
When sodium borohydride is used as a reducing agent, the agent is somewhat hygroscopic and prone to degradation by water. The agent must therefore be stored in a sealed condition. An aqueous solution produced by contact of the agent with a water-containing substance such as sweat or rain is strongly basic because the solution contains a degradation product of the agent. The agent can thus cause adverse effects on the skin and mucous membranes. When placed under acidic or neutral conditions, the agent degrades and produces hydrogen; thus, the agent must be stored in an alkaline solution and cannot be contained in leathers or leather articles. The agent is also difficult to handle because it is degraded by water, producing hydrogen. Hydrazine is a colorless liquid with a pungent odor similar to that of ammonia, and releases white smoke when coming into contact with air. Hydrazine is therefore unsuitable for use. Additionally, hydrazine is difficult to handle because it is easily soluble in water, has a high reducing capacity, and is easily degradable and flammable. When dibutylaluminum hydride is used as a reducing agent, the agent is a colorless liquid but is susceptible to humidity. The agent should therefore be stored and used in an inert gas atmosphere and is difficult to use in an ordinary atmosphere. When oxalic acid is used as a reducing agent, the agent is toxic because it strongly binds to calcium ions in blood in the human body. Oxalic acid is designated as a non-medical deleterious substance under the Poisonous and Deleterious Substances Control Law. The use of such a toxic substance in leathers or leather articles is unsuitable for use for the intended purpose. When formic acid is used as a reducing agent, the formic acid solution or the formic acid vapor is harmful to the skin and eyes and can, in particular, do irreparable damage to the eyes. Additionally, inhalation of formic acid can cause a disorder such as a pulmonary edema. Formic acid is therefore unsuitable for use. Moreover, chronic exposure to formic acid is considered to adversely affect the liver and kidneys, and formic acid is also considered as a possible allergen. Formic acid is therefore unsuitable for use for the purpose of the present invention.

With these facts in mind, the present applicant conducted various investigations and experiments on hexavalent chromium-reducing compounds usable in leathers and leather articles and found compounds suited for the intended purpose.

The organic compounds (A) and (B) contained as the component (I) not only have the primary ability to treat hexavalent chromium, rendering the hexavalent chromium harmless, but also are free of toxicity and cause no disorder such as skin roughness when a leather or a leather article treated with these compounds comes into contact with the skin. The compounds (A) and (B) are preferably compounds that do not degrade each other by their reducing capacity and that are not reactive or interfere with each other. The organic compounds (A) and (B) are each preferably a compound having a basic skeleton represented by chemical formula (1) and are preferably a stable compound comprising C, H, and O atoms.

Each of the organic compounds (A) and (B) having the structure represented by chemical formula (1) has no functional groups such as an aldehyde group and a carboxy group. It is preferable that the organic compounds (A) and (B) have no functional groups including nitrogen-containing groups such as an amine group and an isocyanate group and sulfur-containing groups such as a sulfate group. These functional groups are reactive, therefore can undergo an unexpected reaction during use of leathers or leather articles, and are thus unsuitable for the component (I). The organic compounds (A) and (B) are capable of acting on hexavalent chromium to produce a compound not detected as a hexavalent chromium compound, thereby rendering hexavalent chromium harmless.

### (Organic Compound (A))

The organic compound (A) has the structure represented by chemical formula (1) and further has, for example, a hydroxyphenyl group represented by chemical formula (15). With this functional group, the organic compound (A), when incorporated in leathers or leather articles, takes effect immediately, remains stable for a long time, maintains its reducing effect over a long period of time, and provides high heat resistance. The formation of hexavalent chromium is thus inhibited over a long period of time. Additionally, the organic compound (A) contained in leathers or leather articles is resistant to degradation by water-containing substances such as sweat and rain. Although the reason for these beneficial effects is not clear, collagen, which is a main component of leather, is, in general, chemically cross-linked and stabilizes as a result of tanning. It is hypothesized that the hydroxyphenyl group of the organic compound (A) remains for a long period of time particularly due to the high interactivity with the collagen and is not incorporated completely therein, forming an island of a sea island structure with a high degree of freedom so as to have reducing capacity. Since the organic compound (A) is used in leathers and leather articles, a safe compound having low environmental impact is preferred as the organic compound (A).

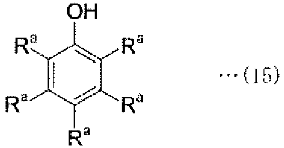

In chemical formula (15), R^{a} is a monovalent group or a divalent group. Examples of the monovalent group include a hydrogen atom, a hydrocarbon group, and an oxygen-containing group. Examples of the divalent group include a divalent hydrocarbon group and a divalent oxygen-containing group. Among these examples, a hydrogen atom, a monovalent hydrocarbon group, a divalent hydrocarbon group, or a hydroxy group is preferred to achieve higher compatibility with leathers and leather articles. A plurality of R^{a} are independent from each other and may be the same or different. Adjacent R^{a} groups may be linked together to form an aromatic ring or an aliphatic ring. R^{a} may be linked to the R^{a} of another hydroxyphenyl group. It is preferable that not all the R^{d} groups be a hydrogen atom at the same time. So that the organic compound (A) takes effect more immediately and stably exhibits a higher reducing capacity over a long period of time in leathers and leather articles, the group represented by chemical formula (15) is more preferably a dihydroxyphenyl group or a trihydroxyphenyl group and even more preferably a 3,4,5-trihydroxyphenyl group.

Preferred as the hydrocarbon group is a C₁ to C₂₀ hydrocarbon group, and specific examples thereof include a C₁ to C₂₀ alkyl group, a C₇ to C₂₀ arylalkyl group, and an unsubstituted or substituted C₆ to C₂₀ aryl group. Examples of the hydrocarbon group include a methyl group, an ethyl group, an n-propyl group, an isopropyl group, an allyl group, an n-butyl group, an isobutyl group, a sec-butyl group, a t-butyl group, an amyl group, an n-pentyl group, a neopentyl group, an n-hexyl group, an n-heptyl group, an n-octyl group, an n-nonyl group, an n-decanyl group, a 3-methylpentyl group, a 1,1-diethylpropyl group, a 1,1-dimethylbutyl group, a 1-methyl-1-propylbutyl group, a 1,1-dipropylbutyl group, a 1,1-dimethyl-2-methylpropyl group, a 1-methyl-1-isopropyl-2-methylpropyl group, a cyclopentyl group, a cyclohexyl group, a cycloheptyl group, a cyclooctyl group, a norbornyl group, an adamantyl group, a phenyl group, an o-tolyl group, an m-tolyl group, a p-tolyl group, a xylyl group, an isopropylphenyl group, a t-butylphenyl group, a naphthyl group, a biphenyl group, a terphenyl group, a phenanthryl group, an anthracenyl group, a benzyl group, and a cumyl group. Examples of the hydrocarbon group further include hydrocarbon groups (an alkoxy group, for example) containing an oxygen-containing group such as a methoxy group, an ethoxy group, or a phenoxy group. Other examples of the hydrocarbon group include hydrocarbon groups containing an unsaturated carboxylic acid ester such as methyl ester, ethyl ester, n-propyl ester, isopropyl ester, n-butyl ester, isobutyl ester, or (5-norbornen-2-yl) ester (when the unsaturated carboxylic acid is a dicarboxylic acid, the ester may be either a monoester or diester).

An example of the oxygen-containing group is a hydroxy group.

Examples of the organic compound (A) include: the compounds of chemical formulas (2) to (12); phenol, o-cresol, m-cresol, p-cresol, 2,3-dimethylphenol, 2,5-dimethylphenol, 3,4-dimethylphenol, 3,5-dimethylphenol, 2,4-dimethylphenol, 2,6-dimethylphenol, 2,3,5-trimethylphenol, 3,4,5-trimethylphenol, 2-tert-butylphenol, 3-tert-butylphenol, 4-tert-butylphenol, BHT (dibutylhydroxytoluene), BHA (butylhydroxyanisole), 2-phenylphenol, 3-phenylphenol, 4-phenylphenol, 3,5-diphenylphenol, 2-naphthylphenol, 3-naphthylphenol, 4-naphthylphenol, 4-tritylphenol, 2-methylresorcinol, 4-methylresorcinol, 5-methylresorcinol, 4-tert-butylcatechol, 2-methoxyphenol, 3-methoxyphenol, 2-propylphenol, 3-propylphenol, 4-propylphenol, 2-isopropylphenol, 3-isopropylphenol, 4-isopropylphenol, 2-methoxy-5-methylphenol, 2-tert-butyl-5-methylphenol, thymol, isothymol, 1-naphthol, 2-naphthol, 2-methyl-1-naphthol, 4-methoxy-1-naphthol, and 7-methoxy-2-naphthol; dihydroxynaphthalenes such as 1,5-dihydroxynaphthalene, 1,7-dihydroxynaphthalene, and 2,6-dihydroxynaphthalene; tetrahydroxynaphthalenes such as 1,3,6,8-tetrahydroxynaphthalene; methyl 3-hydroxy-naphthalene-2-carboxylate, 9-hydroxyanthracene, 1-hydroxypyrene, 1-hydroxyphenanthrene, 9-hydroxyphenanthrene, bisphenolfluorene, and phenolphthalein; benzophenone derivatives such as 2,3,4-trihydroxybenzophenone and 2,2',3,4-tetrahydroxybenzophenone; tannins such as catechol tannin, pyrogallol tannin, oak gall tannin, gallic acid tannin, and phlorotannin; flavonoids such as anthocyanin, rutin, quercetin, fisetin, daidzein, hesperetin, hesperidin, chrysin, flavonol, and hesperetin; catechins such as catechin, gallocatechin, catechin gallate, epicatechin, epigallocatechin, epicatechin gallate, epigallocatechin gallate, procyanidin, and theaflavin; curcumin and lignan; rhododendrol [4-(p-hydroxyphenyl)-2-butanol]; acylated rhododendrols such as acetyl rhododendrol, hexanoyl rhododendrol, octanoyl rhododendrol, dodecanoyl rhododendrol, tetradecanoyl rhododendrol, hexadecanoyl rhododendrol, octadecanoyl rhododendrol, 4-(3-acetoxybutyl)phenyl acetate, 4-(3-propanoyloxybutyl)phenyl propanoate, 4-(3-octanoyloxybutyl)phenyl octanoate, and 4-(3-palmitoyloxybutyl)phenyl palmitate; alkyl ethers of rhododendrol such as 4-(3-methoxybutyl)phenol, 4-(3-ethoxybutyl)phenol, and 4-(3-octyloxybutyl)phenol; rhododendrol glycosides such as rhododendrol-D-glucoside (α- or β-glycoside), rhododendrol-D-galactoside (α- or β-glycoside), rhododendrol-D-xyloside (α- or β-glycoside), and rhododendrol-D-maltoside (α- or β-glycoside); and α-tocopherol, β-tocopherol, γ-tocopherol, and δ-tocopherol.

Other examples of the organic compound (A) include derivatives of the above substances, such as compounds having an alkoxy group and esterified products. Specific examples of the derivatives include pyrogallol-1,3-dimethyl ether, pyrogallol-1,3-diethyl ether, and 5-propylpyrogallol-1-methyl ether.

Examples of the organic compound (A) include compounds with the structure represented by chemical formula (2) (1,2,3-trihydroxybenzene skeleton) and derivatives thereof. Such compounds have the ability to remove hexavalent chromium.

Examples of the derivatives include those having a substituent such as a hydrocarbon group or an oxygen-containing group at the 4-, 5-, or 6-position of the compound represented by chemical formula (2). Preferred examples of the substituent include a C₁ to C₂₀ hydrocarbon group, a C₁ to C₂₀ alkoxy group, and a C₁ to C₂₀ esterified product, and more preferred examples include a C₁ to C₁₀ hydrocarbon group, a C₁ to C₂₀ alkoxy group, and a C₁ to C₁₀ esterified product. These groups are as described above. The same applies to derivatives of compounds described below. Examples of the derivatives include a gallic acid ester such as the compound represented by chemical formula (3), the compound represented by chemical formula (4) that has a plurality of the structures represented by chemical formula (2) per molecule, and derivatives of the compound. Specific examples include catechol tannin, pyrogallol tannin, oak gall tannin, gallic acid tannin, and phlorotannin.

As indicated above, a substituent introduced at the 4-, 5-, or 6-position can be introduced in a manner suitable for the usage of the organic compound (A). For example, when the compound is used by being dissolved in an ester solvent, an ester group can be introduced to increase the compatibility with the solvent.

In the present embodiment, the organic compound (A) preferably contains (i) a gallic acid ester and (ii) at least one compound selected from tannic acid and a derivative thereof, and more preferably contains (i) a gallic acid ester and (ii) tannic acid. When considering the coloration of the leather, the organic compound (A) containing only (i) a gallic acid ester is yet more preferable.

The gallic acid ester has a relatively low molecular weight and may therefore be considered likely to bleed out of leathers and leather articles. However, the gallic acid ester can, due to having a structural moiety corresponding to tannic acid, favorably interact with the tannic acid or derivative thereof and become unlikely to bleed out while maintaining the reducing power. When incorporated in leathers or leather articles, the gallic acid ester has reducing power and takes effect immediately. The reducing power of the gallic acid ester is not as high as that of ascorbic acid, but is higher than that of tannic acid; thus, the gallic acid ester can continue to exhibit reducing power over a long period of time even after degradation and loss of the reducing power of ascorbic acid (the gallic acid ester can again reduce hexavalent chromium ions newly produced by oxidation). When incorporated in leathers or leather articles, the gallic acid ester is resistant to water-containing substances such as sweat and rain and unlikely to be degraded.

The tannic acid and derivatives thereof are bulky, and as seen from the fact that they are conventionally used in tanning, they have high affinity to collagen in leathers and leather articles and are unlikely to bleed out. When incorporated in leathers or leather articles, the tannin acid and derivatives thereof can maintain their reducing power over a long period of time. They can therefore inhibit formation of hexavalent chromium over a longer period of time. The tannic acid and derivatives thereof have low potential to irritate humans (the skin) and are safe. As for the reducing power, the tannic acid and derivatives thereof take effect slower than ascorbic acid and the gallic acid ester. However, the tannic acid and derivatives thereof have high affinity to leathers and leather articles and are resistant to degradation; therefore, the tannic acid and derivatives thereof can, until a leather article fulfills the function and purpose thereof, better maintain the reducing power than can ascorbic acid and the gallic acid ester.

When comprising these compounds, the organic compound (A) therefore has a high ability to penetrate into leathers and leather articles and is capable of remaining in leathers and leather articles for a long time and stably reducing hexavalent chromium over a long period of time. Additionally, although polyphenols can be considered to have a potential to cause browning or discoloration because of their high reducing capacity, the above compounds are incorporated in leathers or leather articles before discoloration and are therefore less likely to cause color fading or color change, thus posing a lower risk of impairing the color or texture of leathers or leather articles. This is also the reason why the above compounds are preferred.

In chemical formula (2), hydroxy groups are present at the 1-, 2-, and 3-positions. However, the same effect can be provided by compounds having a skeleton in which hydroxy groups are introduced at the 1-, 2-, and 4-positions (chemical formula (5)) or a skeleton in which hydroxy groups are introduced at the 1-, 3-, and 5-positions (chemical formula (6)). Derivatives of such compounds also have the same effect.

In chemical formula (2), three hydroxy groups are introduced into one aromatic ring. However, compounds having one hydroxy group or two hydroxy groups on an aromatic ring also have the hexavalent chromium removing ability. Examples of compounds having such a skeleton include phenol, BHT, compounds represented by chemical formulas (7), (8), and (9), and derivatives thereof.

Compounds having a hydroxy group on a plurality of linked aromatic rings also have the same effect. Examples of the compounds include those having one or more hydroxy groups on a naphthalene ring. Examples of such compounds having two hydroxy groups are those represented by chemical formulas (10) and (11). Derivatives of such compounds also have the hexavalent chromium removing ability like the compounds previously described.

Compounds having a hydroxy group introduced at one or more positions of an anthracene ring made up of three linked aromatic rings also exhibit the same ability. An example of such compounds is that represented by chemical formula (12). Derivatives of such compounds also have the hexavalent chromium removing ability.

Examples of the compound represented by chemical formula (1) include compounds having a long-chain alkyl group and a heterocyclic ring. Such compounds have an enhanced organic nature and decreased water solubility. However, these compounds have a higher affinity for organic solvents and thus have the advantage of being soluble in hydrocarbon solvents.

Also preferred as the compound represented by chemical formula (1) are catechins such as catechin, gallocatechin, catechin gallate, epicatechin, epigallocatechin, epicatechin gallate, epigallocatechin gallate, procyanidin, and theaflavin and catechin derivatives. These catechins are superior in terms of safety and exhibit high reducing power in leathers and leather articles.

### (Organic Compound (B))

The organic compound (B) has the structure represented by chemical formula (1) and is devoid of, for example, the hydroxyphenyl group represented by chemical formula (15). Being devoid of the hydroxyphenyl group, the organic compound (B) has difficulty in penetrating into leathers and leather articles; however, thanks to having the structure represented by chemical formula (1), the organic compound (B) is capable of successfully detoxifying hexavalent chromium present at the surface of leathers and leather articles by reducing the hexavalent chromium into trivalent chromium. The use of the organic compound (B) can therefore provide an immediate effect of inhibiting hexavalent chromium ions from being dissolved in a water-containing substance such as sweat or rain from leaching into the environment or from coming into contact with humans. An example of the organic compound (B) is a compound having a hetero ring. Examples of the hetero ring include furan, chromene, isochromene, and xanthene. Examples of derivatives thereof include compounds having the structure represented by chemical formula (13) and derivatives thereof, erythorbic acid and derivatives thereof, and 4-hydroxyfuran-2(5H)-one. These compounds have the hexavalent chromium removing ability.

Examples of the derivatives of ascorbic acid include, but are not limited to, ascorbic acid esters, ascorbic acid phosphate esters, ascorbic acid sulfate esters, ascorbyl glucoside (2-O-α-D-glucopyranosyl-L-ascorbic acid), ascorbyl glucosamine, and dehydroascorbic acid.

Examples of the derivatives of erythorbic acid include erythorbic acid esters.

In the present embodiment, the organic compound (B) is preferably at least one compound selected from ascorbic acid and erythorbic acid and is more preferably ascorbic acid. This compound is easily degradable, thus being unable to maintain its effect over a long period of time and likely to bleed out of leathers or leather articles. However, this compound has a low potential to irritate and is safe for humans (human skin) and, in addition, it has high reducing power and takes effect immediately. Bringing a hexavalent chromium treatment agent containing the organic compound (B) into contact with a leather or a leather article can therefore effectively prevent hexavalent chromium ions from leaching into the environment and coming into contact with humans. In particular, the surface of the leather or leather article can be detoxified quickly, which makes it possible to successfully inhibit the occurrence of skin roughness, allergies and the like. The organic compound (B) is unreactive and incompatible with the organic compound (A) and undegradable by the organic compound (A). The organic compound (B) can therefore be suitably used in the powdery composition for hexavalent chromium treatment according to the present embodiment. Additionally, browning and color fading caused by the organic compound (A) can be prevented by incorporating the organic compound (B) due to the strong reducing power thereof. The organic compound (B) is also preferred in that the organic compound (B), due to being easily degradable, is unlikely to cause coloring and does not impair the color or texture of leathers or leather articles.

As stated above, compounds having the basic skeleton represented by chemical formula (1) in the molecule are capable of rendering hexavalent chromium harmless and removing same.

### (Preferable compounds as component (I))

The component (I) preferably contains at least one of a compound (A-i) represented by formula (A-i) or tannin (A-ii), and more preferably contains both the compound (A-i) and the tannin (A-ii). When considering the coloration of the leather, the organic compound (A) containing only the compound (A-i) is yet more preferable.

The compound (A-i) is represented by formula (A-i) .

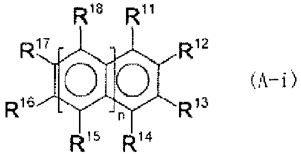

In the formula, n represents 0, 1, or 2. That is, the compound (A-i) has a benzene, naphthalene, or anthracene structure.

R¹¹ to R¹⁸ each independently represents a hydrogen atom, a hydroxy group, a C₁ to C₄ alkyl group, a C₁ to C₄ alkoxy group, or a group represented by formula (a-i). In formula (a-i), R¹⁹ represents a C₁ to C₄ alkyl group.

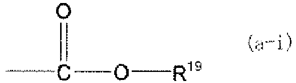

Examples of the C₁ to C₄ alkyl group include a methyl group, an ethyl group, an n-propyl group, an i-propyl group, an n-butyl group, an i-butyl group, an s-butyl group, and a t-butyl group. Examples of the C₁ to C₄ alkoxy group include a methoxy group, an ethoxy group, an n-propoxy group, an isopropoxy group, an n-butoxy group, an isobutoxy group, an s-butoxy group, and a t-butoxy group.

When n is 0, at least one of R¹¹ to R¹⁴, R¹⁶, and R¹⁷ is a hydroxy group. When n is 0, it is preferable that two or three of R¹¹ to R¹⁴, R¹⁶, and R¹⁷ be hydroxy groups because of the increased ability to reduce hexavalent chromium.

When n is 1 or 2, at least one of R¹¹ to R¹⁸ is a hydroxy group. When n is 1 or 2, it is preferable that two or three of R¹¹ to R¹⁸ be hydroxy groups because of the increased ability to reduce hexavalent chromium.

When n is 2, a plurality of R¹⁵ may be the same or different, and a plurality of R¹⁸ may be the same or different.

R¹⁶ and R¹⁷ may be linked together to form a five-membered ring or a six-membered ring. The atoms constituting the ring may include not only carbon atoms but also an oxygen atom. The ring may have a C₁ to C₁₆ alkyl group as a substituent. The C₁ to C₁₆ alkyl group may be linear or branched.

Specific examples of the compound (A-i) include the compounds represented by formulas (2), (3), and (5) to (12), and the compounds mentioned above as examples. The compound (A-i) may be used alone, or two or more compounds (A-i) may be used in combination.

The tannin (A-ii) may be a hydrolyzable tannin or condensed tannin. Examples of the hydrolyzable tannin include gallotannins such as tannic acid (the compound represented by formula (4)) and ellagitannin. In view of preparation of the hexavalent chromium treatment solution described later, a hydrolyzable tannin is suitably used. The tannin (A-ii) may be used alone, or two or more tannins (A-ii) may be used in combination.

In the compound (A-i) and the tannin (A-ii), the carbon to which a hydroxy group is bonded corresponds, for example, to the carbon 2 in formula (1).

As the component (I), at least one of a compound (B-i) represented by formula (B-i) and a compound (B-ii) represented by formula (B-ii) is used together with the compound (A-i) and the tannin (A-ii).

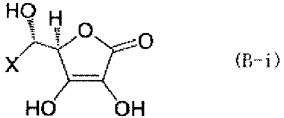

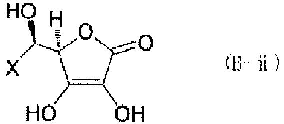

In the formulas above, X is a group represented by any one of formulas (b-i) to (b-iii). In formulas (b-i) to (b-iii), o represents an integer of 0 to 3, p represents an integer of 1 to 3, and q represents an integer of 1 to 17.

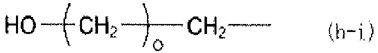

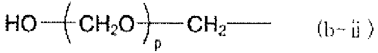

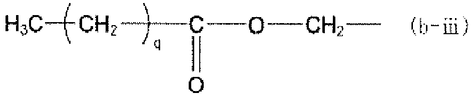

Specific examples of the compound (B-i) and compound (B-ii) include compounds represented by formula (13) and the compounds mentioned above as examples. The compound (B-i) may be used alone, or two or more compounds (B-i) may be used in combination. The compound (B-ii) may be used alone, or two or more compounds (B-ii) may be used in combination. The compounds (B-i) and (B-ii) may also be used in combination.

When a leather is treated using the compound (A-i), the tannin (A-ii), and the compound (B-i) or the compound (B-ii) as the compound (I), i.e., when a leather or a leather article is treated so that the compound (A-i), the tannin (A-ii), and the compound (B-i) or the compound (B-ii) is incorporated into the leather or leather article, hexavalent chromium present in the leather or leather article before the treatment is reduced into harmless trivalent chromium, for example, and hexavalent chromium produced by some cause after the treatment is also reduced into harmless trivalent chromium, for example. This has the consequence that the hexavalent chromium content can be kept below the limit specified by Regulation (EU) No. 3014/2014 (ordinarily smaller than 3 ppm) until the leather or leather article fulfills its function and purpose. In particular, when the compound (A-i) which takes effect immediately and the tannin (A-ii) which takes effect slowly are combined, the hexavalent chromium content can be kept more reliably below the regulation limit until the leather or leather article fulfills its function and purpose. When the compound (B-i) and/or the tannin (B-ii) which has high reducing power and takes effect immediately is further combined with the compound (A-i) and/or the compound (A-ii), the hexavalent chromium in a leather or a leather article, particularly that present near the surface, can be effectively reduced at the time of treatment. When coloring of the leather is taken into consideration, the compound (A-i) is also preferably combined with the compound (B-i) and/or the compound (B-ii).

If the organic compound (A) and the organic compound (B) are used as the component (I), 1 part by mass to 90 parts by mass inclusive of the organic compound (A) and 10 parts by mass to 99 parts by mass inclusive of the organic compound (B) are preferably used relative to 100 parts by mass of the sum of the organic compound (A) and the organic compound (B). Using these amounts makes it possible for the ability to reduce hexavalent chromium to be adequately exhibited in the hexavalent chromium treatment step. If tap water is used in the hexavalent chromium treatment step, 1 part by mass to 55 parts by mass inclusive of the organic compound (A) and 45 parts by mass to 99 parts by mass inclusive of the organic compound (B) are preferably used relative to 100 parts by mass of the sum of the organic compound (A) and the organic compound (B). Tap water contains components (e.g., free residual chlorine and combined residual chlorine) that can ordinarily degrade the organic compound (B), and therefore use of a relatively large amount of the organic compound (B) is preferable.

If a (i) gallic acid ester and (ii) tannic acid are used as the organic compound (A), 11 parts by mass to 70 parts by mass inclusive of the (i) gallic acid ester and 30 parts by mass to 89 parts by mass inclusive of the (ii) tannin acid are preferably used relative to 100 parts by mass of the sum of the (i) gallic acid ester and the (ii) tannin acid. Using these amounts makes it possible for the ability to reduce hexavalent chromium to be adequately exhibited in the hexavalent chromium treatment step.

If the compound (A-i) and/or the tannin (A-ii) are used with the compound (B-i) and/or the compound (B-ii) as the component (I), 1 part by mass to 90 parts by mass inclusive of the total of the compound (A-i) and/or the tannin (A-ii) and 10 parts by mass to 99 parts by mass inclusive of the total of the compound (B-i) and/or the compound (B-ii) are preferably used relative to 100 parts by mass of the sum of the compound (A-i), the tannin (A-ii), the compound (B-i), and the compound (B-ii). Using these amounts makes it possible for the ability to reduce hexavalent chromium to be adequately exhibited in the hexavalent chromium treatment step. If tap water is used in the hexavalent chromium treatment step, 1 part by mass to 55 parts by mass inclusive of the total of the compound (A-i) and/or the tannin (A-ii) and 45 parts by mass to 99 parts by mass inclusive of the total of the compound (B-i) and/or the compound (B-ii) are preferably used relative to 100 parts by mass of the sum of the compound (A-i), the tannin (A-ii), the compound (B-i), and the compound (B-ii). Tap water contains components (e.g., free residual chlorine and combined residual chlorine) that can ordinarily degrade the compound (B-i) and the compound (B-ii), and therefore use of a relatively large amount of the compound (B-i) and/or the compound (B-ii) is preferable.

If the compound (A-i) and the tannin (A-ii) are used as the component (I), 11 parts by mass to 70 parts by mass inclusive of the compound (A-i) and 30 parts by mass to 89 parts by mass inclusive of the tannin (A-ii) are preferably used relative to 100 parts by mass of the total of the compound (A-i) and the tannin (A-ii). Using these amounts makes it possible for the ability to reduce hexavalent chromium to be adequately exhibited in the hexavalent chromium treatment step.

The grain size of the component (I) is preferably 100 mesh or smaller. If the grain size is in that range, dissolution occurs more readily when preparing the hexavalent chromium treatment solution in the hexavalent chromium treatment step described below.

### [Component capable of trapping moisture in the air and dissolving in water (component (II))]

The storability and solubility of the powdery composition for hexavalent chromium treatment according to the embodiments can be improved by combining the component (I) and the component (II). The powdery composition for hexavalent chromium treatment according to the present embodiment can thereby maintain, for a long period of time, the ability to reduce hexavalent chromium. That is, degeneration of the powdery composition for hexavalent chromium treatment according to the embodiments is curbed even if a long period of time elapses before actual use in the hexavalent chromium treatment step. Moreover, the ability to reduce hexavalent chromium can be adequately exhibited in the hexavalent chromium treatment step. Examples of compounds that can be suitably used as the component (II) include sulfates such as anhydrous sodium sulfate, anhydrous magnesium sulfate, and anhydrous calcium sulfate, polymers such as a polyethylene glycol with a weight-average molecular weight of 4,000 to 40,000 inclusive, and an acrylate polymer with a weight-average molecular weight of 4,000 to 40,000 inclusive, and a nonionic surfactant with a melting point of 40°C or higher. These compounds may be used alone or two or more used in combination. These components (II) do not affect the ability of the component (I) to reduce hexavalent chromium and that ability can be maintained for a long period of time.

The sulfates are compounds used as a desiccant. Because the sulfates are excellent at trapping moisture in the air and have high solubility in water, the sulfates are used favorably in the powdery composition for hexavalent chromium treatment according to the embodiments. Anhydrous sodium sulfate in particular is suitably used for its high level of safety.

A sulfate is suitably used when using the compound (A-i), the tannin (A-ii), and the compound (B-i) and/or the compound (B-ii). The sulfate in particular improves the solubility of the powdery composition for hexavalent chromium treatment.

The polymer is favorably in the weight-average molecular weight range described above because the powdery composition for hexavalent chromium treatment can therefore be made into a fine powdery composition.

The polymer is favorably used for the excellent penetration in a leather even when hexavalent chromium treatment is carried out on the leather after the dyeing step and the fatliquoring step described below. The polymer is more preferably a combination of the compound (A-i), and the compound (B-i) and/or the compound (B-ii). That combination in particular improves the solubility of the powdery composition for hexavalent chromium treatment.

The nonionic surfactant is preferably in the melting point range described above because a powdery composition can then be suitably obtained. Examples of the nonionic surfactant include polyoxyethylene (47) lauryl ether and polyoxyethylene (30) oleyl ether. The numerical value after polyoxyethylene indicates the number of repetitions of the oxyethylene unit.

The nonionic surfactant is suitably used for the excellent penetration in a leather even when hexavalent chromium treatment is carried out on the leather after the dyeing step and the fatliquoring step described below. The nonionic surfactant has excellent penetration in a leather even when the hexavalent chromium treatment solution used is prepared using only water as a solvent. The hexavalent chromium treatment solution favorably does not easily affect the appearance of a leather or a leather article when the leather is treated after the dyeing step or after the finishing step and even when the leather article is treated after processing into the leather article. The nonionic surfactant is more preferably used as a combination of the compound (A-i), and the compound (B-i) and/or the compound (B-ii). Such a combination is preferable because of the particular improvement of the solubility of the powdery composition for hexavalent chromium treatment.

The component (II) is preferably used in the amount of 0.001 part by mass to 350 parts by mass inclusive relative to 100 parts by mass of the total of the component (I) from the perspective of storability and solubility. If the sulfate exceeds the upper amount, the sulfate may precipitate, damaging the appearance of the leather.

Particularly favorable combinations of the component (I) and the component (II) are described below. The compound (A-i), and the compound (B-i) and/or the compound (B-ii) are desirably used as the component (I) and a sulfate and a nonionic surfactant are desirably used as the component (II). With such a combination, the compound (A-1) is preferably used in the amount of 1 part by mass to 20 parts by mass inclusive and the compound (B-i) and/or the compound (B-ii) are preferably used in the total amount of 80 parts by mass to 99 parts by mass inclusive relative to 100 parts by mass of the total of the component (I). The sulfate is preferably used in the amount of 10 parts by mass to 300 parts by mass and the nonionic surfactant in the amount of 0.001 part by mass to 10 parts by mass inclusive relative to 100 parts by mass of the total of the component (I). When the sulfate and the nonionic surfactant are thus incorporated, the storability and solubility are excellent and wide-ranging favorable use is possible in the hexavalent chromium treatment step described below.

The compound (A-i), the tannin (A-ii), and the compound (B-i) and/or the compound (B-ii) are desirably used as the component (I) and a relatively large amount of the sulfate is desirably used as the component (II). With this combination, the compound (A-i) and the tannin (A-ii) are preferably used in the total amount of 10 parts by mass to 90 parts by mass inclusive, and the compound (B-i) and/or the compound (B-ii) are preferably used in the total amount of 10 parts by mass to 90 parts by mass inclusive relative to 100 parts by mass of the total of the component (I). The compound (A-1) is preferably used in the amount of 11 parts by mass to 70 parts by mass inclusive and the tannin (A-ii) is preferably used in the amount of 30 parts by mass to 89 parts by mass inclusive relative to 100 parts by mass of the total of the compound (A-i) and the tannin (A-ii). The sulfate is preferably used in an amount exceeding 10 parts by mass and 300 parts by mass or smaller relative to 100 parts by mass of the total of the component (I). If the amount of the sulfate is thus relatively large, the storability and the solubility are excellent. As described below, use is more suitable when carrying out the hexavalent chromium treatment step after the dyeing step and the fatliquoring step than therebefore.

The compound (A-i), the tannin (A-ii), and the compound (B-i) and/or the compound (B-ii) are also desirably used as the component (I) and a relatively small amount of sulfate is desirably used as the component (II). With this combination, the compound (A-i) and the tannin (A-ii) are preferably used in the total amount of 10 parts by mass to 90 parts by mass inclusive, and the compound (B-i) and/or the compound (B-ii) are preferably used in the total amount of 10 parts by mass to 90 parts by mass inclusive relative to 100 parts by mass of the total of the component (I). The compound (A-i) is preferably used in the amount of 11 parts by mass to 70 parts by mass inclusive and the tannin (A-ii) is preferably used in the amount of 30 parts by mass to 89 parts by mass inclusive relative to 100 parts by mass of the total of the compound (A-i) and the tannin (A-ii). The sulfate is preferably used in the amount of 0.05 part by mass to 10 parts by mass inclusive relative to 100 parts by mass of the total of the component (I). Even if the amount of the sulfate is thus relatively small, the storability and the solubility are excellent. As described below, use of the sulfate is more suitable when carrying out the hexavalent chromium treatment step after the dyeing step and the fatliquoring step are both complete. In this case, a mixed solvent of water and a C₁ to C₃ alcohol (particularly IPA) are suitably used as the solvent.

### [Other solid components]

The powdery composition for hexavalent chromium treatment according to the embodiments may also contain a fluorescent substance or other solid components. The other solid components may be used alone or two or more used in combination. Examples of the fluorescent substance include a coumarin derivative, a pyrazoline derivative, a stilbene derivative, a bis-benzoxazolyl derivative, a naphthalimido derivative, a xanthene derivative, a trimethyldihydropyridine derivative, a coeroxene derivative, an anthraquinone derivative, an indigo derivative, an azine derivative, an acridine derivative, and pyranine conc. The other solid components are preferably used in the amount of, for example, larger than 0 part by mass and 12 parts by mass or smaller relative to 100 parts by mass of the component (I).

The powdery composition for hexavalent chromium treatment according to the embodiments is obtained as a fine powder by mixing the component (I) and the component (II). Specifically, an agate mortar and pestle and a flour mill are used for preparation.

### <Tablet>

The tablet according to the embodiments contains the powdery composition for hexavalent chromium treatment. Use of the powdery composition for hexavalent chromium treatment as a tablet instead of use unmodified is preferable because the ability to reduce hexavalent chromium can be even better maintained.

The tablet according to the embodiments is obtained by tableting the powdery composition for hexavalent chromium treatment with an ordinary method.

### <Method for producing a leather>

The method for producing a leather according to the embodiments includes a chrome tanning step for chrome-tanning a skin to obtain a leather and a hexavalent chromium treatment step for treating the leather with the powdery composition for hexavalent chromium treatment.

In the chrome tanning step, a skin is used that has undergone ordinary preparation steps (soaking, lime hair removal, reliming, deliming/bating, and the like). Examples of the skin include, but are not limited to, cow skin, sheep skin, goat skin, pig skin, horse skin, deer skin, kangaroo skin, ostrich skin, chicken skin, and fish skin. Examples of reptile skins include those of sea turtles of the family Cheloniidae, the order Testudines, monitor lizards of the family Varanidae, the suborder Sauria, degus of the family Octodontidae, the suborder Hystricomorpha, reticulated pythons and Indian pythons of the family Boidae, the suborder Serpentes, sea snakes and black-banded sea kraits of the family Hydrophiidae, the suborder Serpentes, Indo-Australian water snakes of the family Homalopsidae, the suborder Serpentes, New Guinea crocodiles of the family Crocodylidae, the order Crocodilia, and American alligators and caimans of the family Alligatoridae, the order Crocodilia. Chrome tanning is carried out with an ordinary method.

The hexavalent chromium treatment step is carried out after the chrome tanning step and before the dyeing step and the fatliquoring step. The powdery composition for hexavalent chromium treatment is dissolved in the solvent to prepare the hexavalent chromium treatment solution. The powdery composition for hexavalent chromium treatment contains the component (II) and therefore has excellent solubility. Heating can be applied to hasten the dissolution.

Examples of the solvent include water, a C₁ to C₃ alcohol (methanol, ethanol, propanol, and isopropanol (IPA)), butanol, acetone, methyl ethyl ketone (MEK), toluene, xylene, N,N-dimethylformamide (DMF), hexane, and heptane. The solvents may be used alone or two or more may be used in combination. Of these solvents, water alone or a mixed solvent of water and a C₁ to C₃ alcohol is preferably used and water alone or a mixed solvent of water and IPA is even more preferably used because the exterior appearance of the leather is not easily damaged and because of the ease of handling.

In the mixed solvent, the alcohol is ordinarily in the amount of 50% by mass or lower and is desirably in the amount of 35% by mass or lower.

In the hexavalent chromium treatment solution, the concentration of the component (I) is preferably 0.1% by mass to 20.0% by mass inclusive. If pure water or a mixed solvent containing pure water is used as the solvent, the concentration of the component (I) is preferably 0.1% by mass to 5.0% by mass inclusive. The component (I) having this concentration curbs color fading and discoloration of the leather, and a state with reduced hexavalent chromium can be maintained over a long period of time. If tap water or a mixed solvent containing tap water is used as the water, the concentration of the component (I) is more preferably 0.2% by mass to 20.0% by mass inclusive. Components (free residual chlorine, combined residual chlorine, and the like) that can ordinarily degrade the component (I) (particularly the organic compound (B), the compound (B-i), and the compound (B-ii)) are contained in tap water. Therefore, the hexavalent chromium treatment solution is preferably prepared to have a large amount of the component (I).

From the perspective of the hexavalent chromium treatment solution rapidly penetrating the leather and being rendered harmless, the kinematic viscosity at 25°C is preferably at least 0.001 (cSt) and lower than 5 (cSt) and is more preferably 0.01 (cSt) to 4.5 (cSt) inclusive. The kinematic viscosity can be adjusted using, for example, the components and the amounts described above.

The resulting hexavalent chromium treatment solution is used to treat the leather. Specifically, the hexavalent chromium treatment solution may be sprayed, sprinkled, or otherwise applied on the leather for treatment, or the leather may be dipped or immersed in the hexavalent chromium treatment solution for treatment. Also, the hexavalent chromium treatment solution may be incorporated into a cloth to rub on the surface of the leather for treatment. In this manner, the component (I) of the hexavalent chromium treatment solution can be incorporated into the leather, rendering the hexavalent chromium harmless.

The leather that has undergone the hexavalent chromium treatment step ordinarily undergoes the dyeing step, the fatliquoring step, the finishing step, and the like, as appropriate. The leather thus obtained as the raw material for a leather article ordinarily becomes the leather article after undergoing a processing step. Examples of the leather article include a shoe, clothing, a hat, a glove, a belt, a wallet, a business card holder, a watchband, a bag, a sofa, a cushion cover, a book cover, a pencase, a mobile telephone case, a personal organizer, a key case, an automobile interior, a glasses case, and a tool box.

In the method for producing the leather according to the embodiments described above, the hexavalent chromium treatment step may be carried out at the same time as a cleaning step, which is carried out after the chrome tanning step. When doing so, the powdery composition for hexavalent chromium treatment is dissolved in the cleaning solution used in the cleaning step. In this case, the cleaning solution also serves as the hexavalent chromium treatment solution.

In the method for producing the leather according to the embodiments described above, the hexavalent chromium treatment step is carried out after the chrome tanning step and before the dyeing step and the fatliquoring step, but the hexavalent chromium treatment step may also be carried out after the chrome tanning step and at the same time as the dyeing step and/or the fatliquoring step. If doing so, the powdery composition for hexavalent chromium treatment is dissolved in the solution used in the dyeing step and/or the fatliquoring step. In this case, the solution serves also as the hexavalent chromium treatment solution.

In the method for producing the leather according to the embodiments described above, the hexavalent chromium treatment step is carried out after the chrome tanning step and before the dyeing step and the fatliquoring step, but the hexavalent chromium treatment step may also be carried out after the dyeing step, after the fatliquoring step, or after the finishing step.

The hexavalent chromium treatment step may be carried out on the leather article after the processing step. The situation in which hexavalent chromium contained in a leather article already produced may also be supposed. When treating such a leather article, the leather portion is removed in the case of a watch, and the leather article portion is treated. In this manner, the component (I) can be incorporated into the leather article portion. In this situation, the rear side of the leather, not the front side (silver side), is preferably treated. The front side of leather naturally has a high density, and the front side of the leather may be coated or otherwise treated in the finishing step, making it difficult for the hexavalent chromium treatment solution to penetrate.

The method for producing a leather according to the embodiments described above uses a powdery composition for hexavalent chromium treatment, but a tablet may be used in place of the powdery composition.

In this manner, the hexavalent chromium treatment step using the powdery composition or a tablet for hexavalent chromium treatment can be carried out at any stage in the leather production after the chrome tanning. Specifically, when a relatively large amount of sulfate (e.g., the mass ratio described above) is contained in the component (II) of the powdery composition or the tablet for hexavalent chromium treatment, the hexavalent chromium treatment step is preferably carried out before the dyeing step and the fatliquoring step are both complete. Even if there is an excessive sulfate content, the excess portion is removed in the washing step of the dyeing step or the fatliquoring step, and therefore precipitation of the sulfate onto the leather surface is curbed. When a relatively small amount of sulfate (e.g., the mass ratio described above) is contained in the component (II), the hexavalent chromium treatment step is preferably carried out after the dyeing step and the fatliquoring step are both complete (e.g., on the dried leather). Precipitation of the sulfate onto the leather surface is curbed.

If the component (II) contains a polymer, the hexavalent chromium treatment step is preferably carried out after the dyeing step and the fatliquoring step are both complete. That is because the effect on the leather surface is small even if there is an excessive polymer content. If the component (II) contains a nonionic surfactant, particularly a sulfate and a nonionic surfactant, the hexavalent chromium treatment step is also preferably carried out after the dyeing step and the fatliquoring step are both complete (e.g., on the dried leather). That is because the nonionic surfactant also easily penetrates the leather after both steps are complete. There is also the benefit that the appearance of the leather is not easily affected even if only water is used as the solvent because penetration into the leather is easy also after both steps are complete.

As described above, the present invention relates to the following.
[1] A powdery composition for hexavalent chromium treatment includes a hexavalent chromium reducing compound component capable of reducing hexavalent chromium into trivalent chromium, and a component capable of trapping moisture in the air and dissolving in water, the hexavalent chromium reducing compound component containing an organic compound (A) having the structure represented by chemical formula (1) and capable of acting on hexavalent chromium for reduction into trivalent chromium, having a hydroxyphenyl group, and having no aldehyde groups and no carboxy groups. 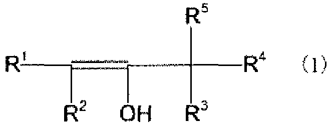 (R¹, R², R³, R⁴, and R⁵ are each independently a substituent composed of C, H, and O atoms, and any of R¹ or R², and R³, R⁴ or R⁵ may be linked together to form a ring.)
   The powdery composition for hexavalent chromium treatment according to [1] is easy to handle during transportation or the like.
[2] In the powdery composition for hexavalent chromium treatment according to [1], the organic compound (A) has the structure represented by chemical formula (1) and capable of acting on hexavalent chromium for reduction into trivalent chromium, has a dihydroxyphenyl group or a trihydroxyphenyl group, and has no aldehyde groups and no carboxy groups.
[3] In the powdery composition for hexavalent chromium treatment according to [2], the organic compound (A) has the structure represented by chemical formula (1) and capable of acting on hexavalent chromium for reduction into trivalent chromium, has a 3,4,5-trihydroxyphenyl group, and has no aldehyde groups and no carboxy groups.
[4] In the powdery composition for hexavalent chromium treatment according to [3], the organic compound (A) comprises (i) a gallic acid ester and (ii) at least one compound selected from tannic acid and a derivative thereof.
[5] In the powdery composition for hexavalent chromium treatment according to [4], the compound (ii) is tannic acid.
[6] In the powdery composition for hexavalent chromium treatment according to any of [1] to [5], the hexavalent chromium reducing compound component further contains an organic compound (B) having the structure represented by chemical formula (1) and capable of acting on hexavalent chromium for reduction into trivalent chromium, and having no hydroxyphenyl groups, no aldehyde groups, and no carboxy groups.
[7] In the powdery composition for hexavalent chromium treatment according to [6], the organic compound (B) comprises at least one compound selected from ascorbic acid, a derivative thereof, erythorbic acid, and a derivative thereof.
   By using the powdery composition for hexavalent chromium treatment according to [2] to [7], it is possible to maintain a state in which the amount of hexavalent chromium is smaller than the regulation amount specified by Regulation (EU) No. 3014/2014 (ordinarily smaller than 3 ppm) until the leather or the leather article fulfills its function and purpose.
[8] A powdery composition for hexavalent chromium treatment includes a hexavalent chromium reducing compound component capable of reducing hexavalent chromium into trivalent chromium, and a component capable of trapping moisture in the air and dissolving in water, the hexavalent chromium reducing compound component comprising at least one compound selected from a compound (A-i) represented by formula (A-i) and a tannin (A-ii). 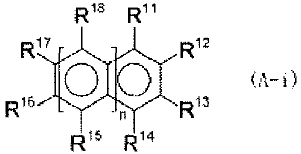 (n represents 0, 1, or 2, R¹¹ to R¹⁸ each independently represents a hydrogen atom, a hydroxy group, a C₁ to C₄ alkyl group, a C₁ to C₄ alkoxy group, or a group represented by the formula (a-i), where R¹⁹ represents a C₁ to C₄ alkyl group, at least one of R¹¹ to R¹⁴, R¹⁶, and R¹⁷ is a hydroxy group when n is 0, at least one of R¹¹ to R¹⁸ is a hydroxy group when n is 1 or 2, a plurality of R¹⁵ may be the same or different and a plurality of R¹⁸ may be the same or different when n is 2, R¹⁶ and R¹⁷ may be linked together to form a five-membered ring or a six-membered ring, and the ring may have a C₁ to C₁₆ alkyl group as a substituent.)
   The powdery composition for hexavalent chromium treatment according to [8] is easy to handle during transportation and the like. 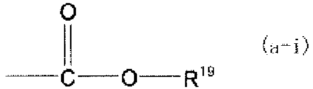
[9] In the powdery composition for hexavalent chromium treatment according to [8], the hexavalent chromium reducing compound component contains at least one compound selected from a compound (B-i) represented by formula (B-i) and a compound (B-ii) represented by formula (B-ii). 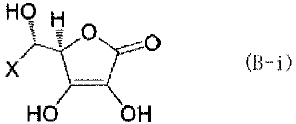 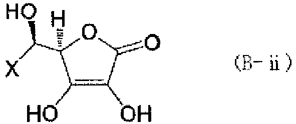 (X represents a group represented by any of formulas (b-i) to (b-iii), where o represents an integer of 0 to 3, p represents an integer of 1 to 3, and q represents an integer of 1 to 17.) 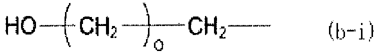 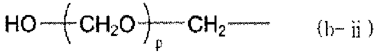 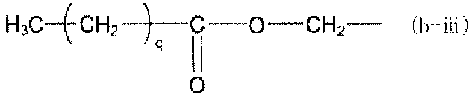
   By using the powdery composition for hexavalent chromium treatment according to [9], it is possible to maintain a state in which the amount of hexavalent chromium is smaller than the regulation amount specified by Regulation (EU) No. 3014/2014 (ordinarily smaller than 3 ppm) until the leather or the leather article fulfills its function and purpose.
[10] In the powdery composition for hexavalent chromium treatment according to any of [1] to [9], the component capable of trapping moisture in the air and dissolving in water comprises at least one compound selected from anhydrous sodium sulfate, anhydrous magnesium sulfate, anhydrous calcium sulfate, a polyethylene glycol with a weight-average molecular weight of 4,000 to 40,000 inclusive, an acrylate polymer with a weight-average molecular weight of 4,000 to 40,000 inclusive, and a nonionic surfactant with a melting point of 40°C or higher.
   The powdery composition for hexavalent chromium treatment according to [10] has excellent storability and solubility.
[11] A tablet contains the powdery composition for hexavalent chromium treatment according to any of [1] to [10].
   The powdery composition for hexavalent chromium treatment according to [11] has more excellent storability and solubility.
[12] A method for producing a leather includes a chrome tanning step for carrying out chrome tanning on a skin to obtain a leather, and a hexavalent chromium treatment step for treating the leather with the powdery composition for hexavalent chromium treatment according to any of [1] to [10].
[13] A method for producing a leather includes a chrome tanning step for carrying out chrome tanning on a skin to obtain a leather, and a hexavalent chromium treatment step for treating the leather with the tablet according to [11].

In the method for producing a leather according to [12] and [13], a state in which the amount of hexavalent chromium is smaller than the regulation amount specified by Regulation (EU) No. 3014/2014 (ordinarily smaller than 3 ppm) is maintained until the obtained leather achieves its function and purpose.

### [Examples]

### [Example 1-1]

In a mortar, 3.3 parts by mass of gallic acid propyl, 96.7 parts by mass of ascorbic acid, 13.0 parts by mass of anhydrous sodium sulfate, and 3.3 parts by mass of polyoxyethylene (47) lauryl ether were placed and ground and mixed finely with a pestle to obtain the powdery composition for hexavalent chromium treatment.

Then the powdery composition for hexavalent chromium treatment was dissolved in tap water to prepare the hexavalent chromium treatment solution. Preparation was carried out so that the total concentration of the gallic acid propyl and the ascorbic acid was 3%.

An alligator leather sheet and a cow leather sheet that had undergone chrome tanning were prepared (the leather sheets had not undergone the dyeing step and the fatliquoring step). The sheets were cut to a size for use in a watchband. The content of hexavalent chromium obtained by the technique of ISO 17075:2008-02 was 8 ppm for the alligator leather and 3 ppm for the cow leather. The total chromium content percentage contained in each band was analyzed using a fluorescent X-ray analyzer and found to be 7,141 ppm in the alligator leather and 16,362 ppm in the cow leather.

The alligator leather sheet and the cow leather sheet were soaked in the hexavalent chromium treatment solution and then dried to carry out the hexavalent chromium treatment step.

### [Example 1-2]

Other than using 20 parts by mass of gallic acid propyl, 80 parts by mass of ascorbic acid, 13.0 parts by mass of anhydrous sodium sulfate, and 3.3 parts by mass of polyoxyethylene (47) lauryl ether as the raw materials of the composition, the procedure as in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-3]

Other than using 1 part by mass of gallic acid propyl, 99 parts by mass of ascorbic acid, 13.0 parts by mass of anhydrous sodium sulfate, and 3.3 parts by mass of polyoxyethylene (47) lauryl ether as the raw materials of the composition, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-4]

Other than using 3.3 parts by mass of gallic acid propyl, 96.7 parts by mass of ascorbic acid, 50.0 parts by mass of anhydrous sodium sulfate, and 3.3 parts by mass of polyoxyethylene (47) lauryl ether as the raw materials of the composition, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-5]

Other than using 3.3 parts by mass of gallic acid propyl, 96.7 parts by mass of ascorbic acid, 100.0 parts by mass of anhydrous sodium sulfate, and 3.3 parts by mass of polyoxyethylene (47) lauryl ether as the raw materials of the composition, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-6]

Other than using 3.3 parts by mass of gallic acid propyl, 96.7 parts by mass of ascorbic acid, 13.0 parts by mass of anhydrous sodium sulfate, and 0.01 part by mass of polyoxyethylene (47) lauryl ether as the raw materials of the composition, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-7]

Other than using 3.3 parts by mass of gallic acid propyl, 96.7 parts by mass of ascorbic acid, 13.0 parts by mass of anhydrous sodium sulfate, and 8.0 parts by mass of polyoxyethylene (47) lauryl ether as the raw materials of the anhydrous composition, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-8]

Other than using polyoxyethylene (30) oleyl ether in place of polyoxyethylene (47) lauryl ether, the procedure in Example 1-1 was followed to obtain the powdery composition for hexavalent chromium treatment.

Then the hexavalent chromium treatment solution was prepared in the same way as in Example 1-1 and was used to carry out the hexavalent chromium treatment step.

### [Example 1-9]

The powdery composition for hexavalent chromium treatment obtained in Example 1-1 was tableted to obtain a tablet.

Other than using the tablet, the hexavalent chromium treatment solution was prepared in the same way as in Example 1-1 and was used to carry out the hexavalent chromium treatment step.

### [Example 2-1]

In a mortar, 10 parts by mass of gallic acid propyl, 40 parts by mass of tannic acid, 50 parts by mass of ascorbic acid, and 100 parts by mass of anhydrous sodium sulfate were placed and ground and mixed finely with a pestle to obtain the powdery composition for hexavalent chromium treatment.

Then the powdery composition for hexavalent chromium treatment was dissolved in tap water to prepare the hexavalent chromium treatment solution. Preparation was carried out so that the total concentration of the gallic acid propyl and the ascorbic acid was 2%.

An alligator leather sheet and a cow leather sheet that had undergone chrome tanning were prepared (the leather sheets had not undergone the dyeing step or the fatliquoring step). The sheets were cut to a size for use in a watchband. The content of hexavalent chromium obtained by the technique of ISO 17075:2008-02 was 8 ppm for the alligator leather and 3 ppm for the cow leather. The total chromium content percentage contained in each band was analyzed using a fluorescent X-ray analyzer and found to be 7,141 ppm in the alligator leather and 16,362 ppm in the cow leather.

The alligator leather sheet and the cow leather sheet were soaked in the hexavalent chromium treatment solution and then dried to carry out the hexavalent chromium treatment step.

### [Example 2-2]

Other than using 25 parts by mass of gallic acid propyl, 25 parts by mass of tannic acid, 50 parts by mass of ascorbic acid, and 100 parts by mass of anhydrous sodium sulfate as the raw materials of the composition, the procedure in Example 2-1 was followed to obtain the powdery composition for hexavalent chromium treatment.

Then the hexavalent chromium treatment solution was prepared in the same way as in Example 2-1 and was used to carry out the hexavalent chromium treatment step.

### [Example 2-3]

Other than using 30 parts by mass of gallic acid propyl, 20 parts by mass of tannic acid, 50 parts by mass of ascorbic acid, and 100 parts by mass of anhydrous sodium sulfate as the raw materials of the composition, the procedure in Example 2-1 was followed to obtain the powdery composition for hexavalent chromium treatment.

Then the hexavalent chromium treatment solution was prepared in the same way as in Example 2-1 and was used to carry out the hexavalent chromium treatment step.

### [Example 2-4]

Other than using 4 parts by mass of gallic acid propyl, 16 parts by mass of tannic acid, 80 parts by mass of ascorbic acid, and 100 parts by mass of anhydrous sodium sulfate as the raw materials of the composition, the procedure in Example 2-1 was followed to obtain the powdery composition for hexavalent chromium treatment.

Then the hexavalent chromium treatment solution was prepared in the same way as in Example 2-1 and was used to carry out the hexavalent chromium treatment step.

### [Example 2-5]

Other than using 10 parts by mass of gallic acid propyl, 40 parts by mass of tannic acid, 50 parts by mass of ascorbic acid, and 11 parts by mass of anhydrous sodium sulfate as the raw materials of the composition, the procedure in Example 2-1 was followed to obtain the powdery composition for hexavalent chromium treatment.

Then the hexavalent chromium treatment solution was prepared in the same way as in Example 2-1 and was used to carry out the hexavalent chromium treatment step.

### [Example 2-6]

Other than using 10 parts by mass of gallic acid propyl, 40 parts by mass of tannic acid, 50 parts by mass of ascorbic acid, and 250 parts by mass of anhydrous sodium sulfate as the raw materials of the composition, the procedure in Example 2-1 was followed to obtain the powdery composition for hexavalent chromium treatment.

Then the hexavalent chromium treatment solution was prepared in the same way as in Example 2-1 and was used to carry out the hexavalent chromium treatment step.

### [Example 2-7]

The powdery composition for hexavalent chromium treatment obtained in Example 2-1 was tableted to obtain a tablet.

Other than using the tablet, the hexavalent chromium treatment solution was then prepared in the same way as in Example 2-1 and was used to carry out the hexavalent chromium treatment step.

### [Example 3-1]

In a mortar, 10 parts by mass of gallic acid propyl, 40 parts by mass of tannic acid, 50 parts by mass of ascorbic acid, and 10 parts by mass of anhydrous sodium sulfate were placed and ground and mixed finely with a pestle to obtain the powdery composition for hexavalent chromium treatment.

Then 50% by mass of tap water and 50% by mass of IPA were mixed to obtain a mixed solvent. The powdery composition for hexavalent chromium treatment was then dissolved in the mixed solvent to prepare the hexavalent chromium treatment solution. The preparation was carried out so that the total concentration of the gallic acid propyl and ascorbic acid was 1%.

An alligator leather sheet and a cow leather sheet that had undergone chrome tanning were prepared (the leather sheets had not undergone the dyeing step or the fatliquoring step). The sheets were cut to a size for use in a watchband. The content of hexavalent chromium obtained by the technique of ISO 17075:2008-02 was 8 ppm for the alligator leather and 3 ppm for the cow leather. The total chromium content percentage contained in each band was analyzed using a fluorescent X-ray analyzer and found to be 7,141 ppm in the alligator leather and 16,362 ppm in the cow leather.

The alligator leather sheet and the cow leather sheet were soaked in the hexavalent chromium treatment solution and then dried to carry out the hexavalent chromium treatment step.

### [Example 3-2]

In a mortar, 25 parts by mass of gallic acid propyl, 25 parts by mass of tannic acid, 50 parts by mass of ascorbic acid, and 10 parts by mass of anhydrous sodium sulfate were placed and ground and mixed finely with a pestle to obtain the powdery composition for hexavalent chromium treatment.

Then the hexavalent chromium treatment solution was prepared in the same way as in Example 3-1 and was used to carry out the hexavalent chromium treatment step.

### [Example 3-3]

In a mortar, 30 parts by mass of gallic acid propyl, 20 parts by mass of tannic acid, 50 parts by mass of ascorbic acid, and 10 parts by mass of anhydrous sodium sulfate were placed and ground and mixed finely with a pestle to obtain the powdery composition for hexavalent chromium treatment.

Then the hexavalent chromium treatment solution was prepared in the same way as in Example 3-1 and was used to carry out the hexavalent chromium treatment step.

### [Example 3-4]

In a mortar, 4 parts by mass of gallic acid propyl, 16 parts by mass of tannic acid, 80 parts by mass of ascorbic acid, and 10 parts by mass of anhydrous sodium sulfate were placed and ground and mixed finely with a pestle to obtain the powdery composition for hexavalent chromium treatment.

Then the hexavalent chromium treatment solution was prepared in the same way as in Example 3-1 and was used to carry out the hexavalent chromium treatment step.

### [Example 3-5]

In a mortar, 10 parts by mass of gallic acid propyl, 40 parts by mass of tannic acid, 50 parts by mass of ascorbic acid, and 0.1 part by mass of anhydrous sodium sulfate were placed and ground and mixed finely with a pestle to obtain the powdery composition for hexavalent chromium treatment.

Then the hexavalent chromium treatment solution was prepared in the same way as in Example 3-1 and was used to carry out the hexavalent chromium treatment step.

### [Example 3-6]

The powdery composition for hexavalent chromium treatment obtained in Example 3-1 was tableted to obtain a tablet.

Other than using the tablet, the hexavalent chromium treatment solution was then prepared in the same way as in Example 3-1 and was used to carry out the hexavalent chromium treatment step.

### [Example 4-1]

In a mortar, 10 parts by mass of gallic acid propyl, 40 parts by mass of tannic acid, 50 parts by mass of ascorbic acid, and 100 parts by mass of polyethylene glycol having a weight-average molecular weight of 8,000 were placed and ground and mixed finely with a pestle to obtain the powdery composition for hexavalent chromium treatment.

Then 50% by mass of tap water and 50% by mass of IPA were mixed to obtain a mixed solvent. The powdery composition for hexavalent chromium treatment was then dissolved in the mixed solvent to prepare the hexavalent chromium treatment solution. The preparation was carried out so that the total concentration of the gallic acid propyl and ascorbic acid was 1%.

An alligator leather sheet and a cow leather sheet that had undergone chrome tanning were prepared (the leather sheets had not undergone the dyeing step or the fatliquoring step). The sheets were cut to a size for use in a watchband. The content of hexavalent chromium obtained by the technique of ISO 17075:2008-02 was 8 ppm for the alligator leather and 3 ppm for the cow leather. The total chromium content percentage contained in each band was analyzed using a fluorescent X-ray analyzer and found to be 7,141 ppm in the alligator leather and 16,362 ppm in the cow leather.

The alligator leather sheet and the cow leather sheet were soaked in the hexavalent chromium treatment solution and then dried to carry out the hexavalent chromium treatment step.

### [Evaluation method and results]

### (Solubility)

Each of the powdery compositions and tablets for hexavalent chromium treatment prepared in Examples were able to be dissolved in tap water or a mixed solvent.

Dissolution was able to occur quickly because the grain size of the component (I) used in Examples was 100 mesh or smaller.

### (Amount of hexavalent chromium)

The hexavalent chromium was reduced in the hexavalent chromium treatment step using the hexavalent chromium treatment solution prepared in each of Examples. More specifically, the leather after the hexavalent chromium treatment step had an amount of hexavalent chromium at the detection limit (2 ppm) in each Example. After placing the leather after the hexavalent chromium treatment step in an environment of 80°C for 24 hours and in an environment of 80°C for 100 hours and then measuring the hexavalent chromium, the amount of hexavalent chromium was at the detection limit (2 ppm). There was no change in the total chromium content in the leather before and after the hexavalent chromium treatment step.

### (Appearance)

There was no change in the appearance of the leather before and after the hexavalent chromium treatment step.

### (Change over time)

The powdery composition for hexavalent chromium treatment obtained in Example 1-1 and the tablet obtained in Example 1-9 were each placed in a bag in the amount of 20 kg each and left in the site atmosphere for three months. After three months, the weight was measured and it was found that the powdery composition for hexavalent chromium treatment had increased by 5% by mass and the tablet by 2% by mass. The increase in weight is thought to be due to absorption of moisture in the air. The tablet is considered to better maintain the ability to reduce hexavalent chromium.

## Claims

1. A powdery composition for hexavalent chromium treatment, the powdery composition comprising:
a hexavalent chromium reducing compound component capable of reducing hexavalent chromium into trivalent chromium; and
a component capable of trapping moisture in air and dissolving in water, wherein
the hexavalent chromium reducing compound component contains an organic compound (A) having a structure represented by chemical formula (1) and capable of acting on hexavalent chromium for reduction into trivalent chromium, having a hydroxyphenyl group, and having no aldehyde groups and no carboxy groups, where R¹, R², R³, R⁴, and R⁵ are each independently a substituent composed of C, H, and O atoms, and any of R¹ or R², and R³, R⁴ or R⁵ is optionally linked together to form a ring.

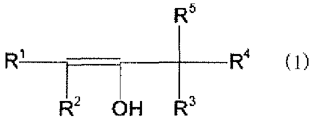

2. The powdery composition for hexavalent chromium treatment according to claim 1, wherein
the organic compound (A) has the structure represented by the chemical formula (1) and capable of acting on hexavalent chromium for reduction into trivalent chromium, has a dihydroxyphenyl group or a trihydroxyphenyl group, and has no aldehyde groups and no carboxy groups.

3. The powdery composition for hexavalent chromium treatment according to claim 2, wherein
the organic compound (A) has the structure represented by the chemical formula (1) and capable of acting on hexavalent chromium for reduction into trivalent chromium, has a 3,4,5-trihydroxyphenyl group, and has no aldehyde groups and no carboxy groups.

4. The powdery composition for hexavalent chromium treatment according to claim 3, wherein
the organic compound (A) comprises
(i) a gallic acid ester, and
(ii) at least one compound selected from tannic acid and a derivative thereof.

5. The powdery composition for hexavalent chromium treatment according to claim 4, wherein
the compound (ii) is tannic acid.

6. The powdery composition for hexavalent chromium treatment according to any one of claims 1 to 5, wherein
the hexavalent chromium reducing compound component further contains an organic compound (B) having the structure represented by the chemical formula (1) and capable of acting on hexavalent chromium for reduction into trivalent chromium, and having no hydroxyphenyl groups, no aldehyde groups, and no carboxy groups.

7. The powdery composition for hexavalent chromium treatment according to claim 6, wherein
the organic compound (B) comprises at least one compound selected from ascorbic acid, a derivative of the ascorbic acid, erythorbic acid, and a derivative of the erythorbic acid.

8. A powdery composition for hexavalent chromium treatment, the powdery composition comprising:
a hexavalent chromium reducing compound component capable of reducing hexavalent chromium into trivalent chromium; and
a component capable of trapping moisture in air and dissolving in water, whrein
the hexavalent chromium reducing compound component contains at least one compound selected from a compound (A-i) represented by formula (A-i) and a tannin (A-ii), where n represents 0, 1, or 2, R¹¹ to R¹⁸ each independently represents a hydrogen atom, a hydroxy group, a C₁ to C₄ alkyl group, a C₁ to C₄ alkoxy group, or a group represented by the formula (a-i), where R¹⁹ represents a C₁ to C₄ alkyl group, at least one of R¹¹ to R¹⁴, R¹⁶, and R¹⁷ is a hydroxy group when n is 0, at least one of R¹¹ to R¹⁸ is a hydroxy group when n is 1 or 2, a plurality of R¹⁵ are optionally the same or different and a plurality of R¹⁸ are optionally the same or different when n is 2, R¹⁶ and R¹⁷ are optionally linked together to form a five-membered ring or a six-membered ring, and the ring optionally has a C₁ to C₁₆ alkyl group as a substituent.

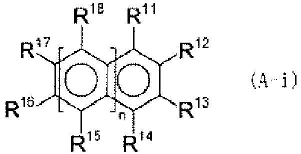

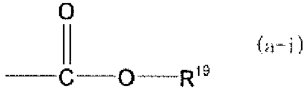

9. The powdery composition for hexavalent chromium treatment according to claim 8, wherein
the hexavalent chromium reducing compound component further contains at least one compound selected from a compound (B-i) represented by formula (B-i) and a compound (B-ii) represented by formula (B-ii), where X represents a group represented by any of formulas (b-i) to (b-iii), where o represents an integer of 0 to 3, p represents an integer of 1 to 3, and q represents an integer of 1 to 17.

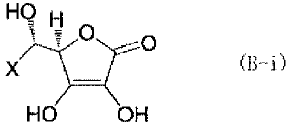

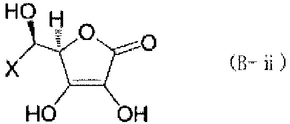

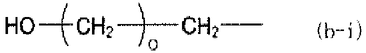

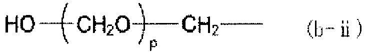

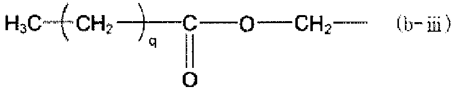

10. The powdery composition for hexavalent chromium treatment according to any one of claims 1 to 9, wherein
the component capable of trapping moisture in air and dissolving in water comprises at least one compound selected from anhydrous sodium sulfate, anhydrous magnesium sulfate, anhydrous calcium sulfate, a polyethylene glycol with a weight-average molecular weight of 4,000 to 40,000 inclusive, an acrylate polymer with a weight-average molecular weight of 4,000 to 40,000 inclusive, and a nonionic surfactant with a melting point of 40°C or higher.

11. A tablet comprising:
the powdery composition for hexavalent chromium treatment according to any one of claims 1 to 10.

12. A method for producing a leather, the method comprising:
a chrome tanning step for carrying out chrome tanning on a skin to obtain a leather; and
a hexavalent chromium treatment step for treating the leather with the powdery composition for hexavalent chromium treatment according to any one of claims 1 to 10.

13. A method for producing a leather, the method comprising:
a chrome tanning step for carrying out chrome tanning on a skin to obtain a leather; and
a hexavalent chromium treatment step for treating the leather with the tablet according to claim 11.

## Patentansprüche

1. Pulverförmige Zusammensetzung zur Behandlung mit sechswertigem Chrom, wobei die pulverförmige Zusammensetzung folgendes umfasst:
eine sechswertiges Chrom-reduzierende Verbindungskomponente, die sechswertiges Chrom zu dreiwertigem Chrom reduzieren kann; und
eine Komponente, die Feuchtigkeit in Luft einfangen kann und in Wasser gelöst werden kann, wobei
die sechswertiges Chrom-reduzierende Verbindungskomponente eine organische Verbindung (A) enthält, die eine Struktur mit der chemischen Formel (1) aufweist und auf sechswertiges Chrom zur Reduktion zu dreiwertigem Chrom einwirken kann, die eine Hydroxyphenylgruppe aufweist und keine Aldehydgruppen und keine Carboxygruppen aufweist, worin R¹, R², R³, R⁴ und R⁵ jeweils unabhängig ein Substituent sind, der aus C-, H- und O-Atomen zusammengesetzt ist, und beliebige von R¹ oder R² und R³, R⁴ oder R⁵ optional unter Bildung eines Rings verknüpft sind.

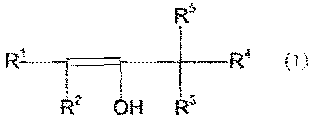

2. Pulverförmige Zusammensetzung zur Behandlung mit sechswertigem Chrom gemäß Anspruch 1, in der die organische Verbindung (A), die die Struktur mit der chemischen Formel (1) aufweist und auf sechswertiges Chrom zur Reduktion zu dreiwertigem Chrom einwirken kann, eine Dihydroxyphenylgruppe oder eine Trihydroxyphenylgruppe aufweist und keine Aldehydgruppen und keine Carboxygruppen aufweist.

3. Pulverförmige Zusammensetzung zur Behandlung mit sechswertigem Chrom gemäß Anspruch 2, in der
die organische Verbindung (A), die die Struktur mit der chemischen Formel (1) aufweist und auf sechswertiges Chrom zur Reduktion zu dreiwertigem Chrom einwirken kann, eine 3,4,5-Trihydroxyphenylgruppe aufweist und keine Aldehydgruppen und keine Carboxygruppen aufweist.

4. Pulverförmige Zusammensetzung zur Behandlung mit sechswertigem Chrom gemäß Anspruch 3, in der
die organische Verbindung (A) umfasst:
(i) einen Gallussäureester und
(ii) mindestens eine Verbindung, ausgewählt aus Gerbsäure und einem Derivat davon.

5. Pulverförmige Zusammensetzung zur Behandlung mit sechswertigem Chrom gemäß Anspruch 4, in der
die Verbindung (ii) Gerbsäure ist.

6. Pulverförmige Zusammensetzung zur Behandlung mit sechswertigem Chrom gemäß mindestens einem der Ansprüche 1 bis 5, in der
die sechswertiges Chrom-reduzierende Verbindungskomponente ferner eine organische Verbindung (B) enthält, die die Struktur mit der chemischen Formel (1) aufweist und auf sechswertiges Chrom zur Reduktion zu dreiwertigem Chrom einwirken kann, und keine Hydroxyphenylgruppen, keine Aldehydgruppen und keine Carboxygruppen aufweist.

7. Pulverförmige Zusammensetzung zur Behandlung mit sechswertigem Chrom gemäß Anspruch 6, in der
die organische Verbindung (B) mindestens eine Verbindung, ausgewählt aus Ascorbinsäure, einem Derivat der Ascorbinsäure, Erythorbinsäure und einem Derivat der Erythorbinsäure umfasst.

8. Pulverförmige Zusammensetzung zur Behandlung mit sechswertigem Chrom, wobei die pulverförmige Zusammensetzung folgendes umfasst:
eine sechswertiges Chrom-reduzierende Verbindungskomponente, die sechswertiges Chrom zu dreiwertigem Chrom reduzieren kann; und
eine Komponente, die Feuchtigkeit in Luft einfangen kann und in Wasser gelöst werden kann, wobei
die sechswertiges Chrom-reduzierende Verbindungskomponente mindestens eine Verbindung, ausgewählt aus einer Verbindung (A-i) mit Formel (A-i) und ein Tannin (A-ii) enthält, worin n 0, 1 oder 2 bezeichnet, R¹¹ bis R¹⁸ jeweils unabhängig ein Wasserstoffatom, eine Hydroxygruppe, eine C₁-C₄-Alkylgruppe, eine C₁-C₄-Alkoxygruppe oder eine Gruppe mit der Formel (a-i) bezeichnet, worin R¹⁹ eine C₁-C₄-Alkylgruppe bezeichnet, mindestens eines von R¹¹ bis R¹⁴, R¹⁶ und R¹⁷ eine Hydroxygruppe ist, wenn n 0 ist, mindestens eines von R¹¹ bis R¹⁸ eine Hydroxygruppe ist, wenn n 1 oder 2 ist, mehrere R¹⁵ optional gleich oder verschieden sind und mehrere R¹⁸ optional gleich oder verschieden sind, wenn n 2 ist, R¹⁶ und R¹⁷ optional unter Bildung eines fünfgliedrigen oder eines sechsgliedrigen Rings miteinander verknüpft sind und der Ring optional eine C₁-C₁₆-Alkylgruppe als einen Substituenten aufweist.

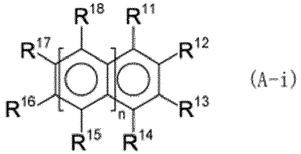

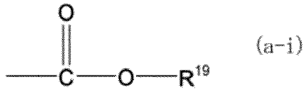

9. Pulverförmige Zusammensetzung zur Behandlung mit sechswertigem Chrom gemäß Anspruch 8, in der
die sechswertiges Chrom-reduzierende Verbindungskomponente ferner mindestens eine Verbindung, ausgewählt aus einer Verbindung (B-i) mit Formel (B-i) und einer Verbindung (B-ii) mit Formel (B-ii) enthält, worin X eine Gruppe mit einer der Formeln (b-i) bis (b-iii) bezeichnet, worin o eine ganze Zahl von 0 bis 3 bezeichnet, p eine ganze Zahl von 1 bis 3 bezeichnet und q eine ganze Zahl von 1 bis 17 bezeichnet.

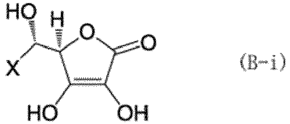

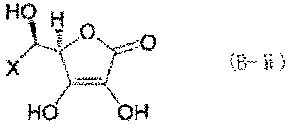

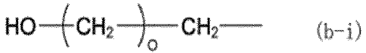

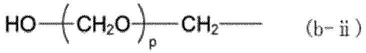

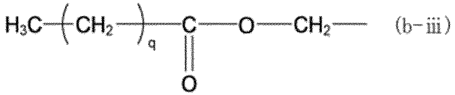

10. Pulverförmige Zusammensetzung zur Behandlung mit sechswertigem Chrom gemäß mindestens einem der Ansprüche 1 bis 9, in der
die Verbindung, die Feuchtigkeit in Luft einfangen kann und in Wasser gelöst werden kann, mindestens eine Verbindung umfasst, die ausgewählt ist aus wasserfreiem Natriumsulfat, wasserfreiem Magnesiumsulfat, wasserfreiem Calciumsulfat, einem Polyethylenglykol mit einem gewichtsmittleren Molekulargewicht von 4.000 bis 40.000 einschließlich, einem Acrylatpolymer mit einem gewichtsmittleren Molekulargewicht von 4.000 bis 40.000 einschließlich und einem nicht-ionischen Tensid mit einem Schmelzpunkt von 40°C oder höher.

11. Tablette, die die pulverförmige Zusammensetzung zur Behandlung mit sechswertigem Chrom gemäß mindestens einem der Ansprüche 1 bis 10 umfasst.

12. Verfahren zur Herstellung eines Leders, wobei das Verfahren die folgenden Schritte umfasst:
einen Chromgerbungsschritt zur Durchführung der Chromgerbung an einer Tierhaut, um so ein Leder zu erhalten; und
einen Schritt der Behandlung mit sechswertigem Chrom zur Behandlung des Leders mit der pulverförmigen Zusammensetzung zur Behandlung mit sechswertigem Chrom gemäß mindestens einem der Ansprüche 1 bis 10.

13. Verfahren zur Herstellung eines Leders, wobei das Verfahren die folgenden Schritte umfasst:
einen Chromgerbungsschritt zur Durchführung der Chromgerbung an einer Tierhaut, um so ein Leder zu erhalten; und
einen Schritt der Behandlung mit sechswertigem Chrom zur Behandlung des Leders mit der Tablette gemäß Anspruch 11.

## Revendications

1. Composition pulvérulente pour le traitement du chrome hexavalent, la composition pulvérulente comprenant :
un composant de composé réducteur de chrome hexavalent capable de réduire le chrome hexavalent en chrome trivalent ; et
un composant capable de piéger l'humidité dans l'air et de se dissoudre dans l'eau, dans lequel
le composant de composé réducteur de chrome hexavalent contient un composé organique (A) présentant une structure représentée par la formule chimique (1) et capable d'agir sur le chrome hexavalent pour une réduction en chrome trivalent, présentant un groupe hydroxyphényle, et ne présentant aucun groupe aldéhyde et aucun groupe carboxy, où R¹, R², R³, R⁴, et R⁵ sont chacun indépendamment un substituant composé d'atomes C, H, et O, et l'un quelconque de R¹ ou R², et R³, R⁴ ou R⁵ est facultativement lié ensemble pour former un cycle.

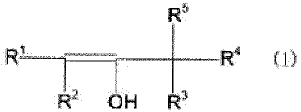

2. Composition pulvérulente pour le traitement du chrome hexavalent selon la revendication 1, dans laquelle
le composé organique (A) présente la structure représentée par la formule chimique (1) et est capable d'agir sur le chrome hexavalent pour une réduction en chrome trivalent, présente un groupe dihydroxyphényle ou un groupe trihydroxyphényle, et ne présente aucun groupe aldéhyde et aucun groupe carboxy.

3. Composition pulvérulente pour le traitement du chrome hexavalent selon la revendication 2, dans laquelle
le composé organique (A) présente la structure représentée par la formule chimique (1) et capable d'agir sur le chrome hexavalent pour une réduction en chrome trivalent, présente un groupe 3,4,5-trihydroxyphényle, et ne présente aucun groupe aldéhyde et aucun groupe carboxy.

4. Composition pulvérulente pour le traitement du chrome hexavalent selon la revendication 3, dans laquelle
le composé organique (A) comprend
(i) un ester d'acide gallique, et
(ii) au moins un composé sélectionné parmi l'acide tannique et un dérivé de celui-ci.

5. Composition pulvérulente pour le traitement du chrome hexavalent selon la revendication 4, dans laquelle
le composé (ii) est l'acide tannique.

6. Composition pulvérulente pour le traitement du chrome hexavalent selon l'une quelconque des revendications 1 à 5, dans laquelle
le composant de composé réducteur de chrome hexavalent contient en outre un composé organique (B) présentant la structure représentée par la formule chimique (1) et capable d'agir sur le chrome hexavalent pour une réduction en chrome trivalent, et ne présentant aucun groupe hydroxyphényle, aucun groupe aldéhyde, et aucun groupe carboxy.

7. Composition pulvérulente pour le traitement du chrome hexavalent selon la revendication 6, dans laquelle
le composé organique (B) comprend au moins un composé sélectionné parmi l'acide ascorbique, un dérivé de l'acide ascorbique, l'acide érythorbique, et un dérivé de l'acide érythorbique.

8. Composition pulvérulente pour le traitement du chrome hexavalent, la composition pulvérulente comprenant :
un composant de composé réducteur de chrome hexavalent capable de réduire le chrome hexavalent en chrome trivalent ; et
un composant capable de piéger l'humidité dans l'air et de se dissoudre dans l'eau, dans laquelle
le composant de composé réducteur de chrome hexavalent contient au moins un composé sélectionné parmi un composé (A-i) représenté par la formule (A-i) et un tanin (A-ii), où n représente 0, 1, ou 2, R¹¹ à R¹⁸ représentent chacun indépendamment un atome d'hydrogène, un groupe hydroxy, un groupe alkyle en C₁ à C₄, un groupe alcoxy en C₁ à C₄, ou un groupe représenté par la formule (a-i), où R¹⁹ représente un groupe alkyle en C₁ à C₄, au moins l'un de R¹¹ à R¹⁴, R¹⁶, et R¹⁷ est un groupe hydroxy quand n est 0, au moins l'un de R¹¹ à R¹⁸ est un groupe hydroxy quand n est 1 ou 2, une pluralité de R¹⁵ sont facultativement identiques ou différents et une pluralité de R¹⁸ sont facultativement identiques ou différents quand n est 2, R¹⁶ et R¹⁷ sont facultativement liés ensemble pour former un cycle à cinq chaînons ou un cycle à six chaînons, et le cycle présente facultativement un groupe alkyle en C₁ à C₁₆ comme substituant.

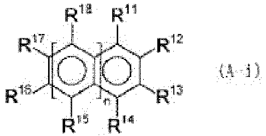

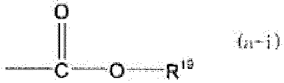

9. Composition pulvérulente pour le traitement du chrome hexavalent selon la revendication 8, dans laquelle
le composant de composé réducteur de chrome hexavalent contient en outre au moins un composé sélectionné parmi un composé (B-i) représenté par la formule (B-i) et un composé (B-ii) représenté par la formule (B-ii), où X représente un groupe représenté par l'une quelconque des formules (b-i) à (b-iii), où o représente un nombre entier de 0 à 3, p représente un nombre entier de 1 à 3, et q représente un nombre entier de 1 à 17.

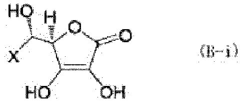

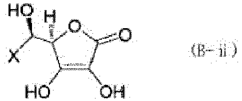

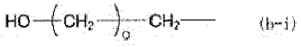

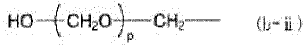

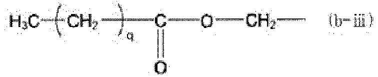

10. Composition pulvérulente pour le traitement du chrome hexavalent selon l'une quelconque des revendications 1 à 9, dans laquelle
le composant capable de piéger l'humidité dans l'air et de se dissoudre dans l'eau comprend au moins un composé sélectionné parmi le sulfate de sodium anhydre, le sulfate de magnésium anhydre, le sulfate de calcium anhydre, un polyéthylène glycol de poids moléculaire moyen en poids de 4 000 à 40 000 inclus, un polymère d'acrylate de poids moléculaire moyen en poids de 4 000 à 40 000 inclus, et un tensioactif non ionique ayant un point de fusion de 40 °C ou plus.

11. Comprimé comprenant :
la composition pulvérulente pour le traitement du chrome hexavalent selon l'une quelconque des revendications 1 à 10.

12. Procédé de production d'un cuir, le procédé comprenant :
une étape de tannage au chrome pour mettre en œuvre un tannage au chrome sur une peau pour obtenir un cuir ; et
une étape de traitement du chrome hexavalent pour traiter le cuir avec la composition pulvérulente pour le traitement du chrome hexavalent selon l'une quelconque des revendications 1 à 10.

13. Procédé de production d'un cuir, le procédé comprenant :
une étape de tannage au chrome pour mettre en œuvre un tannage au chrome sur une peau pour obtenir un cuir ; et
une étape de traitement au chrome hexavalent pour traiter le cuir avec le comprimé selon la revendication 11.
